# EUROPEAN PATENT SPECIFICATION

(11) **EP 2 815 018 B1**
(45) Date of publication and mention of the grant of the patent: **15.08.2018**
(21) Application number: 13711968.1
(22) Date of filing: 05.02.2013
(51) Int. Cl.: D06N 3/00, B65G 15/34, D06M 15/693, D03D 15/00, D06M 15/70, B32B 27/12, F16G 1/04

(54) **STRUCTURAL ARRANGEMENT FOR A TEXTILE STRAP WITH FLUORESCENT COATING**
STRUKTURELLE ANORDNUNG FÜR EIN TEXTILBAND MIT EINER FLUORESZIERENDEN BESCHICHTUNG
ARRANGEMENT STRUCTURAL POUR UNE COURROIE EN MATIÈRE TEXTILE AYANT UN REVÊTEMENT FLUORESCENT

(30) Priority: 13.02.2012 HU 1200025
(43) Date of publication of application: 24.12.2014
(73) Proprietor: Sebö, Gyula, 2310 Szigetszentmiklós (HU)
(72) Inventor: Sebö, Gyula, 2310 Szigetszentmiklós (HU)
(86) International application number: PCT/IB2013/050961
(87) International publication number: WO 2013/121322

(56) References cited:
- DE-A1- 4 206 997
- DE-U1-202012 000 531
- GB-A- 299 321
- GB-A- 866 474
- GB-A- 1 572 791
- TW-A- 201 142 106

## Description

The invention relates to a structural arrangement for a textile strap with fluorescent coating, wherein the textile strap is made of synthetic fibres and natural fibres, it is preferably belt-shaped, and has a plastic coating covering 100% of its surface.

Both in everyday and industrial use there is a great need for plates produced by dipping, lamination or extrusion technology, belt-shaped conveyor elements, machine parts, where the tensile strength of the product is ensured by a textile strap, and the other preferred physical properties, such as a non-slip, water-repellent, abrasion-resistant or flexible surface, by a plastic or rubber coating.

The materials, that is the textile strap and the coating, melted mostly from granules, powder or block rubber and additives, are combined in order to combine the preferred properties of the different components in the final product, bearing in mind the special requirements of use. The adhesion between the fabric and the coating covering it is of primary importance in most cases. Imperfect adhesion excludes the product from many of the fields of application, as even the smallest damage to the coating can cause it to separate from the textile strap.

In the prior art utility model No. US 5,063,615 discloses a coextruded plastic belt strap, wherein a thin plastic layer equal to 1/5^{th} and a thick plastic layer equal to 4/5^{th} of the total thickness are extruded together. An adhesion promoting film layer is placed between them.

Another solution is presented in the application No. WO 2010122978 A1 disclosing a rubber composition for a conveyor belt. According to the utility model a galvanized steel cord covered with an adhesive rubber layer is interposed between cover rubber layers. The top layer of the conveyor belt is a rubber composition which excels in durability and productivity, furthermore the rubber used for the conveyor belt can be easily shaped and formed.

Utility model No. DE 10 2006 025 562 A1 discloses a transmission belt made of an elastic material with an embedded tension-bearing layer, wherein the tension-bearing layer consists of at least one layer of plastic film made of a material with high tensile strength and low elongation. Preferably, the outer plastic layer has a non-slip and textured surface. The utility model discloses many possible compositions for the plastic film. Among other things, it mentions the embedding of a fabric layer made of polyester or polyamide fibres, or a combination thereof.

However, a shortcoming of the prior art is that an advantageous property of polypropylene based fabrics (films) is not sufficiently kept in mind, namely that during processing PP fibres melt together perfectly with most other plastics, providing adhesion between the fabric layer and the coating, furthermore a wide-ranging number of plastics adhere well to polypropylene. According to the prior art the number of plastic variants adhering well to polyester is low, furthermore the price of the base material is higher. A disadvantage of polypropylene fibres from the point of view of load-bearing is the melting point, which is often below the processing temperature of plastic base materials. Although the PP fabric and the granules melt together during the known joining processes, the PP fibres lose most of their load-bearing ability and flexibility.

The patent No. GB866474disloses an antistatic and fire-resistant conveyer or transmission belting is made from fabric comprising yarns containing combustible cotton, rayon, nylon, or polyethylene terephthalate fibres or filaments associated in the weft and/or the warp with filaments of a flexible thermoplastic fire-resistant polymer or copolymer of vinyl chloride or vinylidene chloride, one or both sets of fibres or filaments being rendered antistatic by the incorporation of an antistatic agent, the noncombustible fibres or filaments being at least 15% by weight of the total, and the fabric being embedded in a resilient fire-resistant thermoplastic composition.

The patent No GB1572791 describes an inexpensive fencing which is suitable for use along a road or motor way or even to surround stock and which will absorb energy on impact rather than becoming deformed.

The patent No. TW201142106 provides a method for manufacturing high visibility fluorescent rubber tarpaulins, which comprises the steps of blending a rubber material into a fluorescent gum, coating the rubber gum on a surface of a basic fabric, then calendering the surface with the fluorescent gum to form a composite fabrics, adding sulfur into the composite fabrics, and finally coating a layer of rubber paste or fluorescent gum over another surface of the composite fabrics that is not coated with the rubber paste or the fluorescent gum. With a feature for the fluorescent gum capable of reflecting light beam, the invention mainly applies the rubber tarpaulins on a canopy to increase its visibility so as to enhance the rescue chance.

In the prior art there are numerous known plastic and/or rubber products containing fluorescent pigment. Their task is, in addition to aesthetic benefits, to ensure high visibility.

With this invention the task is to develop a structural arrangement for a textile strap according to claim 1, with fluorescent coating, preferably a belt, the outer plastic coating of which adheres perfectly to the embedded textile strap. At least two kinds of base materials should be selected as synthetic fibres for the textile strap. Thus a part of the synthetic fibres melts together with the coating during the joining process of the coating and the textile strap, while the other part retains most of its flexibility. In order to prevent excessive elongation during the joining of the coating and the textile strap, natural-based fibres with low elongation properties are mixed to the synthetic fibres. Furthermore the task is to develop a textile strap, for which the base material of the coating can be selected from the widest possible range, ensuring that the coating and the textile strap adhere together as strongly as possible during a known joining process. This allows the use of heavy-duty fabrics with a protective coating for the most specific applications. Furthermore the task is to combine the coating with a fluorescent dye, allowing the finished products to be used for a high visibility and a load-bearing function simultaneously, in particular as dog collars, leashes.

The invention is based on the recognition that in strap-shaped belts covered with plastic an unbreakable adhesion between the coating and the fabric embedded into it by melting them together is preferable. For example, the number of plastics adhering well to polyester fibres is low, however, the high melting point of polyester is perfectly suitable for joining with the coating at high temperatures.

Furthermore it is also recognized that by mixing at least two kinds of synthetic fibres and cotton fibres in the textile strap adhesion can be produced between the textile strap and the coating without any need for an adhesive or other additives. With the appropriate selection of the base materials, a part of the synthetic fibres in the fabric portion melts together with the material of the coating during a known extrusion or dipping process, ensuring good adhesion to the coating, while the other part of the synthetic fibres in the fabric portion, with a higher melting point, is not damaged at the high temperature and ensures the load-bearing ability of the belt. However, these synthetic fibres get elongated due to the heat, which is undesirable from the point of view of load-bearing. In order to avoid deterioration by elongation, natural-based fibres with lower elongation due to heat can be incorporated into the fabric structure. The fluorescent dye/pigment does not reduce the desirable physical properties of the finished product, it is mixed into the material of the coating on the basis of an already known technology, and the equipment thus made preferably has a high visibility function as well.

Thus the invention relates to a structural arrangement for a textile strap according to claim 1 with fluorescent coating, wherein the textile strap comprising warp and weft yarns is made of at least one layer of synthetic-based fibres, it is preferably belt-shaped, and has a plastic-containing coating covering 100% of its surface.

The essence of the development is that synthetic-based fibres with a melting point equal to or lower than that of the coating, melting together with the coating, and load-bearing synthetic fibres with a melting point higher than that of the coating are incorporated into the textile strap, furthermore a fluorescent dye/pigment is mixed into the material of the coating.

Natural-based fibres with low elongation are incorporated into the textile strap.
The load-bearing synthetic fibres, the synthetic fibres melting together with the coating and the natural-based fibres are incorporated into the textile strap at least as warp yarns, kept together by the weft yarns. In the textile strap the load-bearing synthetic fibres, the synthetic fibres melting together with the coating and the natural-based fibres are arranged symmetrically on both sides of the axis line.
The material of the coating is most preferably (Thermoplastic) elastomer-based.
The material of the load-bearing synthetic fibres is most preferably polyester.
The material of the synthetic fibres melting together with the coating is most preferably polypropylene.
The material of the natural-based fibres incorporated into the textile strap is most preferably cotton- and/or linen-based.

The material of the weft yarns in the textile strap, up to at least 50% of the total weight of the weft yarns, is polyester. The surface of the coating is preferably sandblasted and/or textured. The proportion by weight of the load-bearing synthetic fibres in the warp yarns of the textile strap is minimum 50%.

The invention is illustrated in the following figures:
- Figure 1: shows a cross-sectional view of the structural arrangement of the synthetic fibres melting together with the coating containing fluorescent pigment, the load-bearing synthetic fibres and the natural-based fibres, covered by the coating, in a symmetrical arrangement.
- Figure 2: shows a cross-sectional view of the arrangement of the natural-based fibres in the fabric structure, and a preferred method of surface finishing.

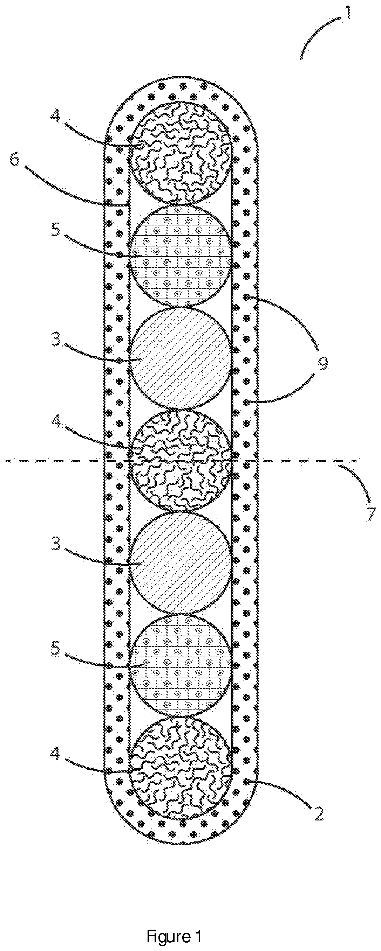

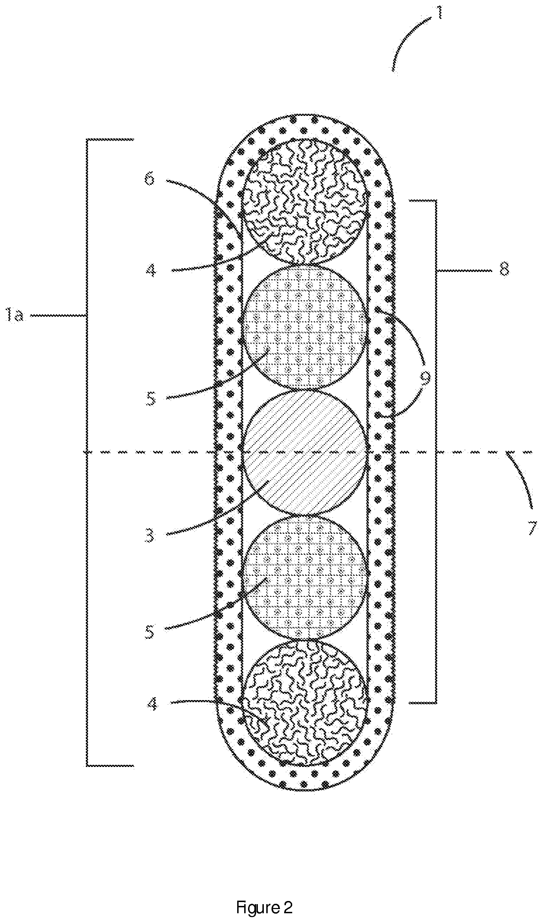

Figures 1 and 2 show a cross-sectional view of the structural arrangement for a textile strap with fluorescent coating **1** according to the invention. The synthetic fibres melting together with the coating **3,** the load-bearing synthetic fibres **4** and the natural-based fibres **5** are shown in a symmetrical arrangement as warp yarns along the axis line **7,** kept together by the weft yarns **6.** The coating **2** is preferably a skin-friendly plastic, covering 100% of the fabric, it is most preferably made by extrusion with a minimum thickness of 0.8 mm. Figures 1 and 2 show the most preferred, even distribution of the fluorescent pigment **9.**

Figure 2 shows that the textile strap **1a** is most preferably bounded by the weft yarns **6,** and is preferably belt-shaped. The strap has preferably a grooved or sandblasted surface finish **8,** and displays a brand name protruding from the surface.

The structural arrangement for a textile strap with fluorescent coating allows the wide use of polypropylene base materials in various known manufacturing processes, in which the plastic-containing coating melts together with these polypropylene fibres, while the load-bearing function is ensured by natural-based fibres and load-bearing synthetic fibres with a melting point higher than that of polypropylene. Thus the load-bearing ability of the coating is also increased, as it works together with the textile strap. The use of fluorescent pigment mixed into the coating allows the structural arrangement for a textile strap with fluorescent coating to be used as fashion items and as high visibility equipment simultaneously.

## Claims

1. A structural arrangement for a textile strap with fluorescent coating, wherein the textile strap is made of at least one layer of synthetic-based fibres, it is preferably belt-shaped, and has a plastic-containing coating covering 100% of its surface, furthermore a fluorescent dye/pigment is mixed into the material of the coating **characterized in that** at least one synthetic-based fibre **(3)** with a melting point equal to or lower than that of the coating **(2),** melting together with the coating, and load-bearing synthetic fibres **(4)** with a melting point higher than that of the coating **(2)** are incorporated into the textile strap **(1a),** furthermore natural-based fibres **(5)** with low elongation are incorporated into the textile strap **(1a)** and the load-bearing synthetic fibres **(4)** the synthetic fibres melting together with the coating **(3)** and the natural-based fibres **(5)** are incorporated into the textile strap **(1a)** as warp yarns, kept together by the weft yarns **(6),** and the surface of the coating **(2)** is sandblasted and/or textured, furthermore in the textile strap **(1a)** the load-bearing synthetic fibres **(4),** the synthetic fibres melting together with the coating **(3)** and the natural-based fibres **(5)** are arranged symmetrically on both sides of the axis line **(7).**

2. The structural arrangement for a textile strap with fluorescent coating **(1)** according to claims 1, **characterized in in that** the material of the coating **(2)** is most preferably (Thermoplastic) elastomer-based, the material of the load-bearing synthetic fibres **(4)** is polyester, while the material of the synthetic fibres melting together with the cover **(3)** is polypropylene.

3. The structural arrangement for a textile strap with fluorescent coating **(1)** according to claims 1-2, **characterized in that** the material of the natural-based fibres **(5)** incorporated into the textile strap **(1a)** is most preferably cotton- and/or linen-based.

4. The structural arrangement for a textile strap with fluorescent coating **(1)** according to claims 1-3, **characterized in that** the proportion by weight of the load-bearing synthetic fibres **(4)** in the warp yarns of the textile strap **(1a)** is minimum 50%.

## Patentansprüche

1. Strukturelle Anordnung für ein Textilband mit fluoreszierender Beschichtung, wobei das Textilband aus mindestens einer Schicht aus Fasern auf synthetischer Basis hergestellt ist, vorzugsweise eine Gürtelform aufweist und eine kunststoffhaltige Beschichtung aufweist, die 100% seiner Oberfläche bedeckt; ferner wird ein Fluoreszenzfarbstoff/Pigment in das Material der Beschichtung eingemischt, **dadurch gekennzeichnet, dass** mindestens eine synthetische Faser (3) mit einem Schmelzpunkt, der gleich oder niedriger als der der Beschichtung (2) ist, und mit der Beschichtung zusammen schmilzt, und tragende synthetische Fasern (4) mit einem Schmelzpunkt, der höher als der der Beschichtung (2) ist, in das Textilband (1a) eingearbeitet werden, ferner werden Fasern auf natürlicher Basis (5) mit geringer Dehnung in das Textilband (1a) eingearbeitet und die tragenden synthetischen Fasern (4), die zusammen mit der Beschichtung schmelzenden synthetischen Fasern (3) und den Fasern auf natürlicher Basis (5) werden in das Textilband (1a) als Kettgarne eingearbeitet, die durch die Schussgarne (6) zusammengehalten sind, und die Oberfläche der Beschichtung (2) sandgestrahlt und/oder strukturiert ist, ferner sind im Textilband (1a) die tragenden Kunstfasern (4), die zusammen mit der Beschichtung schmelzenden synthetischen Fasern (3) und die Fasern auf natürlicher Basis (5) symmetrisch auf beiden Seiten der Achsenlinie (7) angeordnet.

2. Strukturelle Anordnung für ein Textilband mit fluoreszierender Beschichtung (1) nach Anspruch 1, **dadurch gekennzeichnet, dass** das Material der Beschichtung (2) vorzugsweise (thermoplastisch) auf Elastomerbasis ist, das Material der tragenden synthetischen Fasern (4) Polyester ist, während das Material der synthetischen Fasern, die zusammen mit der Beschichtung (3) schmelzen, Polypropylen ist.

3. Strukturelle Anordnung für ein Textilband mit fluoreszierender Beschichtung (1) nach den Ansprüchen 1-2, **dadurch gekennzeichnet, dass** das Material der Fasern (5) auf natürlicher Basis, die in das Textilband (1a) eingearbeitet sind, vorzugsweise auf Baumwollen- und/oder auf Leinenbasis ist.

4. Strukturelle Anordnung für ein Textilband mit fluoreszierender Beschichtung (1) nach den Ansprüchen 1-3, **dadurch gekennzeichnet, dass** der Gewichtsanteil der tragenden synthetischen Fasern (4) in den Kettgarnen des Textilbandes (1a) mindestens 50% ist.

## Revendications

1. Agencement structurel des bandes textiles à revêtement fluorescent où la bande textile comprend au moins un couche de fibres synthétiques. La forme de ceinture est préférée et le revêtement en plastique couvre l'intégralité de la surface. En outre, du colorant/pigment fluorescent est mêlé à la matière de base du revêtement, **caractérisé en ce qu'**au moins un fibre à base synthétique **(3)** dont la température de fusion est égale ou inférieure à celle du revêtement **(2),** mêlé au revêtement, et les fibres synthétiques porteurs **(4)** dont la température de fusion est supérieure à celle du revêtement **(2)** sont incorporés à la bande textile **(1a),** en outre des fibres à base naturelle **(5)** de faible distension longitudinale sont incorporés à la bande textile **(1a)** et les fibres synthétiques porteurs **(4),** les fibres synthétiques mêlés au revêtement **(3)** et les fibres à base naturelle **(5)** sont incorporés à la bande textile **(1a)** en forme de fils de chaine gardés ensemble par des fils de trame **(6)** et la surface du revêtement **(2)** est sablée et/ou texturée, en outre à l'intérieur de la bande textile **(1a),** les fibres synthétiques porteurs **(4),** les fibres synthétiques mêlés au revêtement **(3)** et les fibres à base naturelle **(5)** sont arrangés symétriquement aux deux côtés de l'axe **(7).**

2. L'arrangement structurel de la bande textile par revêtement fluorescent **(1),** tel qu'il est envisagé sous la revendication I., **caractérisé en ce que** la matière de base du revêtement **(2)** est, de préférence, à base d'élastomère (Thermoplastic), celle des fibres synthétiques porteurs **(4)** est de polyesther, tandis que la matière de base des fibres synthétiques mêlés au revêtement **(3)** est de polypropylène.

3. L'arrangement structurel de la bande textile à revêtement fluorescent **(1),** tel qu'il est envisagé sous la revendication 1-2. **caractérisé en ce que** la matière de base des fibres à base naturelle **(5),** incorporée dans la bande textile **(1a),** est de préférence à base de coton et/ou de lin.

4. L'arrangement structurel de la bande textile à revêtement fluorescent **(1),** tel qu'il est envisagé sous la revendication 1-3. **caractérisé en ce qu'**en terme de poids, le taux des fibres synthétiques porteurs **(4)** au sein des fils de chaîne de la bande textile **(1a)** est égal ou supérieur à 50 %.
